Europäisches Patentamt

European Patent Office

Office européen des brevets

(11) Numéro de publication : **0 514 299 A1**

(19)

## (12) DEMANDE DE BREVET EUROPEEN

(21) Numéro de dépôt : **92420157.7**

(22) Date de dépôt : **14.05.92**

(51) Int. Cl.⁵ : **D03C 1/14, F16C 7/00**

(30) Priorité : **15.05.91 FR 9106066**

(43) Date de publication de la demande :
**19.11.92 Bulletin 92/47**

(84) Etats contractants désignés :
**BE CH DE FR IT LI**

(71) Demandeur : **S.A. DES ETABLISSEMENTS STAUBLI (France)**
**B.P. 20 183 Rue des Usines**
**F-74210 Faverges (FR)**

(72) Inventeur : **Froment, Jean-Paul**
**La Creuse Sud, Route des Côtes**
**F-74210 Doussard (FR)**

(74) Mandataire : **Monnier, Guy et al**
**Cabinet Monnier 150 Cours Lafayette B.P. 3058**
**F-69393 Lyon Cédex 03 (FR)**

(54) **Mécanisme de tirage à bielles interposé entre une mécanique d'armature et les cadres de lisses d'un métier à tisser.**

㉗ L'attelage du levier oscillant (8) et de chacune des bielles tubulaires (7) du mécanisme est opéré à l'aide de deux flasques (9) pourvus de mors longitudinauc (9c) qui sont fixés de manière démontable à Tadite bielle à l'aide de deux poussoirs (12, 13) associés à des vis d'écartement (14) accessibles depuis l'extérieur.

Fig. 4

La présente invention a trait aux ratières et autres mécaniques d'armure pour la formation de la foule sur les machines à tisser, et elle vise plus particulièrement les mécanismes de tirage du type à bielles qui assurent l'accouplement des organes mobiles d'actionnement d'une telle mécanique avec les cadres de lisses à déplacement vertical montés sur le métier correspondant.

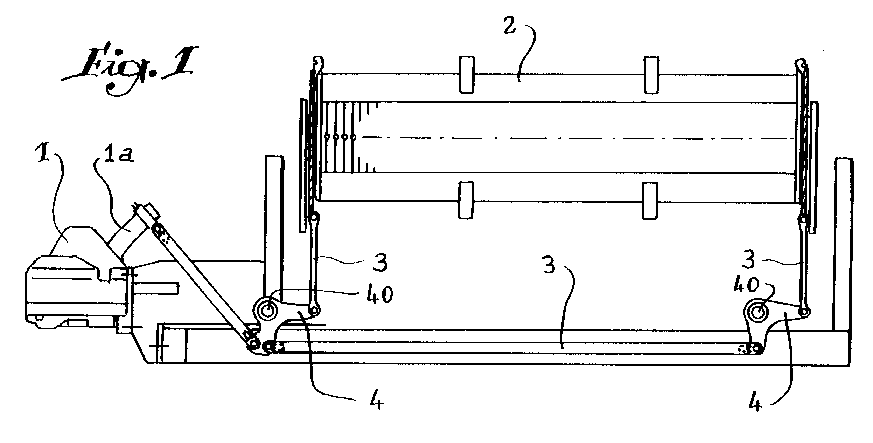

Afin de bien situer les choses, on a très schématiquement rappelé à la fig. 1 du dessin annexé aux présentes l'agencement général d'un mécanisme de tirage du type envisagé. Sur cette figure, la référence 1a désigne l'un des organes d'actionnement d'une ratière 1, tandis que la référence 2 correspond à l'un des cadres de lisses montés sur le métier à tisser, et l'on peut constater que pour assurer la liaison articulée entre lesdits éléments 1a et 2, le mécanisme de tirage comprend, au niveau de chaque cadre 2, une série de bielles 3 orientées soit horizontalement, soit verticalement, soit encore obliquement, lesquelles bielles 3 sont attelées les unes aux autres à l'aide de leviers oscillants 4 montés côte à côte le long d'axes horizontaux fixes 40.

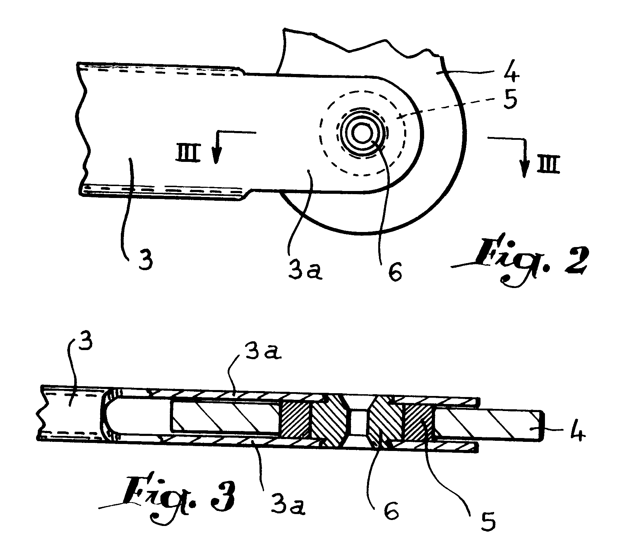

Dans la technique courante telle qu'illustrée en fig. 2 et 3, chacune des extrémités de chaque bielle 3, généralement prévue sous la forme d'un tube à section aplatie, est découpée axialement pour déterminer une sorte de fourche terminale entre les ailes 3a de laquelle est introduite l'extrémité correspondante du levier oscillant 4 considéré. L'assemblage pivotant est opéré à l'aide d'une bague intermédiaire ou pivot 5 à profil circulaire dont la retenue dans une ouverture du levier 4 est opérée par un rivet central 6.

Il convient ici de relever qu'une telle structure crée une zone affaiblie, de telle sorte qu'eu égard aux efforts importants transmis par le mécanisme de tirage, aux vitesses de fonctionnement imparties à l'heure actuelle aux mécaniques d'armure, et aux difficultés de lubrification de l'ensemble, les ruptures surviennent fréquemment au niveau des attelages bielles/leviers. On notera en outre que l'assemblage par rivetage s'oppose à tout démontage, de sorte qu'en cas de rupture d'un attelage, il est indispensable de procéder au remplacement d'une série de pièces.

C'est à ces inconvénients qu'entend principalement remédier la présente invention, et ce à l'aide d'un nouveau système d'attelage bielle/levier qui assure le renforcement de la zone envisagée sans accroître le poids de la bielle, et ce tout en permettant un démontage et un remontage aisés.

Le mécanisme de tirage suivant l'invention est défini à la revendication 1.

Le dessin annexé, donné à titre d'exemple, permettra de mieux comprendre l'invention, les caractéristiques qu'elle présente et les avantages qu'elle est susceptible de procurer :

Comme on l'a indiqué plus haut, fig. 1 expose le type de mécanisme de tirage auquel se réfère l'invention, tandis que fig. 2 et 3 rappellent la technique antérieure connue.

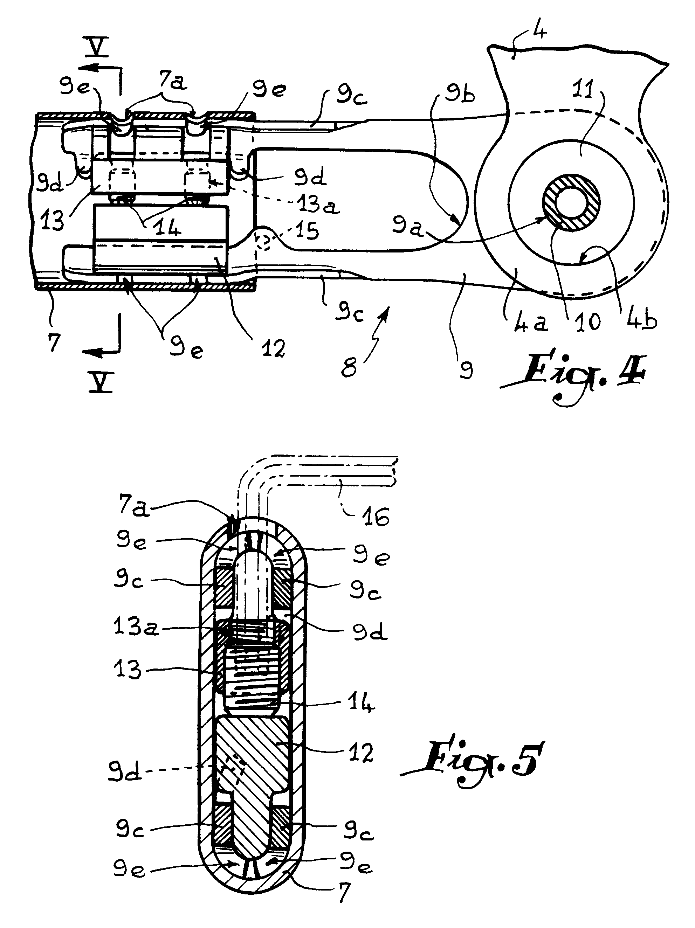

Fig. 4 est une coupe longitudinale de l'un des systèmes d'attelage bielle/levier d'un mécanisme de tirage établi conformément à l'invention.

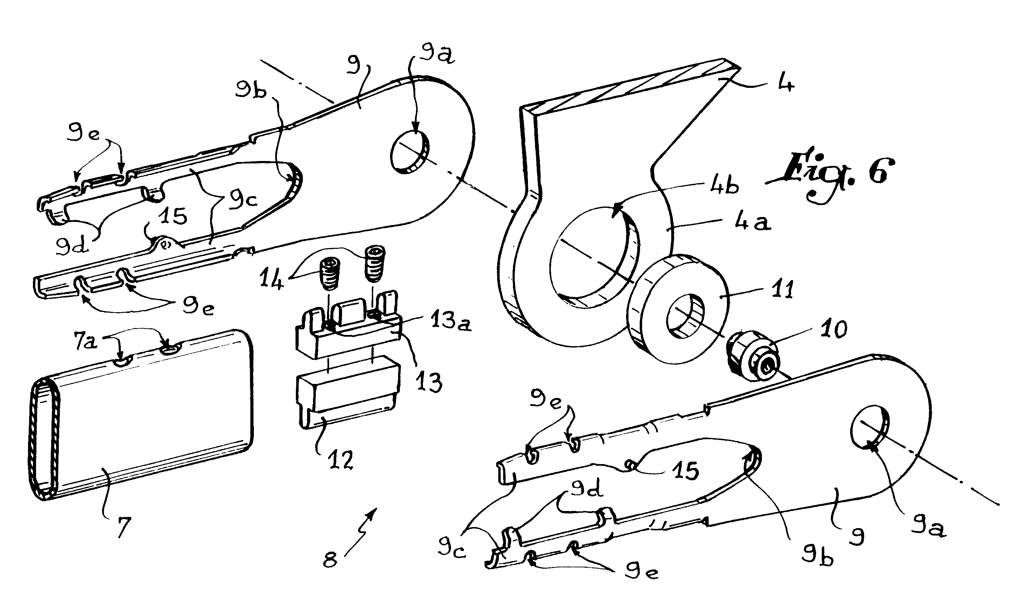

Fig. 5 est une coupe transversale suivant le plan indiqué en V-V en fig. 4.

Fig. 6 est une vue en perspective illustrant l'agencement des pièces qui concourent à l'attelage envisagé.

En fig. 4 à 6, on a indiqué en 7 l'extrémité d'une bielle qui, à la façon en soi connue, est constituée par un profilé tubulaire à section aplatie. L'extrémité 7 envisagée est destinée à venir s'atteler à la queue inférieure 4a de l'un des leviers oscillants 4 du mécanisme de tirage.

Pour cet attelage, l'invention fait appel à un embout 8 qui, dans la forme de réalisation illustrée en fig. 4 à 6, est constitué par deux flasques 9 qui, comme exposé plus loin, sont profilés à l'une de leurs extrémités pour s'engager axialement dans l'ouverture terminale de l'extrémité 7. Comme plus particulièrement montré en fig. 6, l'extrémité opposée de chaque flasque 9 est percée d'un trou 9a qui est destiné à coopérer avec un rivet tubulaire 10, lequel traverse une douille ou pivot 11 introduit dans une ouverture 4b de la queue 4a du levier 4. Après matage des extrémités du rivet 10, le levier 4 est ainsi lié aux deux flasques 9 de l'embout 8.

A l'opposé du trou 9a, chaque flasque 9 est découpé d'une échancrure axiale 9b qui détermine deux ailes longitudinales, chacune de celles-ci étant divisée axialement pour former deux mors parallèles référencés 9c. Il convient ici d'observer que ces ailes présentent en section transversale un profil cintré qui s'étend sur approximativement une amplitude angulaire de l'ordre de 60 à 90° de façon à ce qu'elles viennent s'appliquer de manière étroite contre la paroi intérieure de l'extrémité de la bielle 7, comme illustré en fig. 5, en vue d'assurer une fonction de blocage, comme on le verra plus loin. Aux quatre mors 9c des deux flasques 9 sont associés deux poussoirs 12 et 13 constitués par des pions dont le bord tourné vers l'extérieur est conformé pour prendre appui contre la paroi interne desdits mors 9c ; on notera que le poussoir 13 est percé de deux taraudages transversaux 13a aptes à coopérer avec deux vis d'écartement 14, à la manière qui sera décrite plus loin.

Les deux poussoirs 12 et 13 sont destinés à être engagés l'un au-dessus de l'autre entre les mors 9c des deux flasques 9 une fois ces derniers disposés parallèlement l'un à l'autre à l'intérieur de l'extrémité de la bielle 7 ; l'enfoncement des flasques est limité par une petite butée 15 portée par une languette solidaire de l'un des mors précités. Les poussoirs 12 et 13 sont convenablement positionnés entre les deux flasques 9 par le moyen de pattes obliques 9d prévues sur l'un des mors 9c de chacun desdits flasques, ce positionnement étant tel que les vis 14 viennent en coïncidence d'une part avec des accès transversaux formés par des échancrures 9e ménagées dans les ailes 9c, d'autre part avec deux perforations 7a pratiquées dans la paroi de l'extrémité de la bielle 7.

On conçoit dans ces conditions que les vis 14 sont ainsi susceptibles d'être manoeuvrées à l'aide d'une clef telle que 16 (fig. 5) engagée à travers les perforations 7a. l'extrémité de chaque vis 14 vient porter contre la paroi longitudinale en vis-à-vis du poussoir 12, si bien que les deux poussoirs 12 et 13 sont écartés à force ; par suite de la déformabilité élastique conférée par l'échancrure centrale 9b de chaque flasque 9, l'écartement des poussoirs 12 et 13 assure l'application des mors 9c contre la paroi interne de l'extrémité 7 de la bielle et la solidarisation de cette dernière et des flasques 9 qui forment l'embout.

Il convient d'observer que cette solidarisation n'est pas définitive, puisqu'il suffit à l'opérateur de manoeuvrer au dévissage les vis 14 pour provoquer la libération des mors 9c par les poussoirs 12 et 13 et permettre ainsi l'extraction de l'extrémité 7. Cette dernière est ainsi susceptible d'être aisément remplacée en cas de rupture ou d'avarie.

On notera au surplus que le poids de l'ensemble formé par la bielle 7 et ses deux embouts 8 est sensiblement réduit par rapport à la technique antérieure, du fait que les embouts 8 renforcent substantiellement la résistance de la zone d'attelage de la bielle sur le levier oscillant et qu'on peut ainsi avoir recours, pour la construction de cette bielle 7, à un profilé tubulaire présentant une épaisseur moindre.

## Revendications

1. Mécanisme de tirage interposé entre une mécanique d'armure (1) et les cadres de lisses (2) d'un métier à tisser, du genre comprenant une série de bielles tubulaires à section aplatie (3) qui, pour leur attelage à des leviers oscillants de liaison (4), sont pourvues d'au moins un embout (8) dont l'une des extrémités est profilée pour être attelée au levier conjugué (4) par un pivot (10-11) tandis que l'extrémité opposée présente des mors longitudinaux déformables (9c) propres, sous l'effet d'au moins une vis (14), à assurer la fixation de l'embout à l'extrémité correspondante de la bielle, caractérisé en ce que chaque embout (8) est formé par deux flasques séparés (9) dont chacun est découpé d'une échancrure longitudinale (9a) définissant deux mors longitudinaux (9c) qui pour être introduits axialement à l'intérieur de la bielle (7) présentent en section transversale un profil cintré de façon à s'appliquer contre la paroi interne de ladite bielle sous l'effet de poussoirs opposés (12, 13) manoeuvrés à l'écartement à l'aide de la vis (14).

2. Mécanisme suivant la revendication 1, caractérisé en ce que chaque mors (9c) comporte des pattes (9d) aptes à assurer le positionnement des poussoirs (12, 13), ainsi qu'une butée (15) prévue pour limiter l'enfoncement des flasques (9) à l'intérieur de l'extrémité (7) de la bielle, ledit mors étant découpé d'écrancrures (9e) propres à venir en coïncidence avec des perforations (7a) pratiquées dans la bielle pour le passage de l'outil (16) destiné à la manoeuvre de la vis d'écartement (14).

Fig. 1

Fig. 2

Fig. 3

Fig. 4

Fig. 5

Fig. 6

**Office européen des brevets**

# RAPPORT DE RECHERCHE EUROPEENNE

Numero de la demande

EP    92 42 0157

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 162 598 (STAUBLI) <br> * page 2, ligne 31 - page 3, ligne 15; figures 1-5 * <br><br> --- | 1,2 | D03C1/14 <br> F16C7/00 |
| A | FR-A-2 607 155 (BURCKLE) <br> * page 4, ligne 20 - page 5, ligne 3; figure 1 * <br><br> --- | 1,2 | |
| A | FR-A-2 482 217 (DENEUBOURG) <br> * revendication 1; figure 7B * <br><br> --- | 1,2 | |
| A | FR-A-2 261 438 (CASSEL) <br> * figure 1 * <br><br> ----- | 1,2 | |

| | | | DOMAINES TECHNIQUES RECHERCHES (Int. Cl.5) |
|---|---|---|---|
| | | | F16C <br> F16B <br> D03C |

Le présent rapport a été établi pour toutes les revendications

| Lieu de la recherche | Date d'achèvement de la recherche | Examinateur |
|---|---|---|
| LA HAYE | 13 JUILLET 1992 | REBIERE J.L. |